# EUROPEAN PATENT SPECIFICATION

(11) **EP 4 511 346 B1**
(45) Date of publication and mention of the grant of the patent: **18.03.2026**
(21) Application number: 23728598.6
(22) Date of filing: 21.04.2023
(51) Int. Cl.: C04B 40/00, C04B 22/00, C04B 103/14

(54) **PROCESS FOR THE PREPARATION OF A CALCIUM SILICATE HYDRATE SEED COMPOSITION USEFUL AS A HARDENING ACCELERATOR FOR CEMENTITIOUS COMPOSITIONS**
VERFAHREN ZUR HERSTELLUNG EINER CALCIUMSILIKATHYDRAT-SAATZUSAMMENSETZUNG, NÜTZLICH ALS HÄRTUNGSBESCHLEUNIGER FÜR ZEMENTZUSAMMENSETZUNGEN
PROCÉDÉ DE PRÉPARATION D'UNE COMPOSITION DE GRAINES D'HYDRATE DE SILICATE DE CALCIUM UTILE EN TANT QU'ACCÉLÉRATEUR DE DURCISSEMENT POUR DES COMPOSITIONS DE CIMENT

(30) Priority: 21.04.2022 EP 22169208
(43) Date of publication of application: 26.02.2025
(73) Proprietor: Construction Research & Technology GmbH, 83308 Trostberg (DE)
(72) Inventor: WELDERT, Kai-Steffen, 86159 Augsburg (DE); FARRA, Ramzi, 83308 Trostberg (DE); WACHE, Steffen, 83308 Trostberg (DE); KIRSCHBAUER, Sabine, 83308 Trostberg (DE); OBERMAYR, Linda, 83308 Trostberg (DE)
(74) Representative: Lorenz, Klaus Uwe
(86) International application number: PCT/EP2023/060466
(87) International publication number: WO 2023/203207

(56) References cited:
- CN-A- 112 661 164
- DE-A1- 102017 110 292

## Description

The present invention relates to a process for the preparation of a calcium silicate hydrate seed composition useful as a hardening accelerator for cementitious compositions.

Portland cement is a hydraulic binder that is most commonly used in construction. Partial substitution of Portland cement by Supplementary Cementitious Materials (SCMs) such as fly ash brings advantages to environment, technology and economy. Using fly ash reduces exploitation of natural resources for Portland cement production such as limestone, clay and consumes industrial by-product. That helps to decrease the amount of CO₂ emitting and fuel burnt during cement production. However, SCMs have one main drawback originating from their slow pozzolanic reaction in early ages. The early compressive strength of cementitious compositions containing Portland cement, particularly at high level of Portland replacement, can be increased by applying hardening accelerators.

Hardening accelerators shorten the setting time of the hydraulic binder. In specific applications such as pre-cast concrete, fast setting of the fabricated elements is desirable. In other words, the kinetics of the chemical reactions is modified such that the hydration process is accelerated. This advantageously results in shorter production times and cycles.

Addition of calcium silicate hydrate (C-S-H) nanoparticles into Ordinary Portland Cements (OPCs) exhibits a seeding effect providing new nucleation sites within the pore space away from the particle surfaces. C-S-H nanoparticles exhibit an accelerating effect without deteriorating final strength development.

According to WO 02/070425, calcium silicate hydrate in particular present in dispersed (finely or particularly finely dispersed) form, can be used as such a hardening accelerator.

Recently, methods for producing calcium silicate hydrate have been described in the state of the art:
WO 2010/026155 describes a process for the preparation of a hardening accelerator composition by reaction of a water-soluble calcium compound with a water-soluble silicate compound. Said reaction is carried out in the presence of an aqueous solution which contains a water-soluble comb polymer suitable as a plasticizer for hydraulic binders.

WO 2014/026940 describes a process for the for the preparation of a hardening accelerator composition by reaction of a water-soluble calcium compound with a water-soluble silicate compound in the presence of an aqueous solution which contains a plasticizer suitable for hydraulic binders. The reaction is characterized in that said reaction is being carried out in the presence of apatite and that the molar ratio of calcium to phosphor in the hardening accelerator is from 25:1 to 400:1.

CN112661164 describes a method for preparing hydrated calcium silicate through a chemical coprecipitation method. DE102017110292 describes a method for preparing reaction product by controlled precipitation, co-precipitation and self-organization processes in microjet reactor.

The traditional approaches for synthesizing C-S-H particles, are hardly scalable. So far, none of them has been satisfactory in terms of cost effectiveness and seeding efficacy. Preferably, the C-S-H seed composition is present as liquid suspension. The liquid suspension has the advantage that they can be easily dosed through volumetric dispensers, e.g. those as used in pre-cast concrete plants. Compositions prepared by prior art methods may tend to sedimentation, viscosity-increase or gelation which complicates the dosage thereof.

Thus, there remains a need for new, innovative and simple methods of production of calcium silicate hydrate compositions, preferably by continuous processes. Especially, there is a need for obtaining stable calcium silicate hydrate compositions with high seeding efficacy.

The object of the present invention is solved by a process for the preparation of a calcium silicate hydrate seed composition useful as a hardening accelerator for cementitious compositions, comprising
(a) making a first jet and a second jet to collide in an interaction zone in the presence of an aqueous solution of at least one polymeric water-soluble dispersant, wherein
   - the first jet comprises an aqueous solution of a calcium compound, and
   - the second jet comprises an aqueous solution of a silicate compound, to precipitate calcium silicate hydrate seeds and to obtain a primary calcium silicate hydrate seed composition, and
(b) subjecting the primary calcium silicate hydrate seed composition to a shearing treatment, preferably a continuous shearing treatment.

Advantageously, the process of the present invention is a continuous or semi-continuous process. Certain embodiments of the inventive process allow for directly obtaining stable calcium silicate hydrate seed compositions from said continuous process. In other words, the resulting calcium silicate hydrate seed compositions are ready-to-use and may have favourable storage stability.

Herein, the term "C-S-H seeds" denotes minute particles consisting of primary calcium silicate hydrate particles, and/or agglomerates thereof. Generally, at least 80 wt.-% of the particles have a size below 1000 nm, preferably below 950 nm.

Herein, the term "storage stability" denotes that the composition remains liquid without showing tendency to sedimentation or gel-formation upon storage for 6 months at ambient conditions.

Herein, the term "jet" denotes a high-momentum, fast-flowing focused fluid beam. Generally, a jet is obtained by raising the pressure of a liquid stream by a highpressure pump and releasing or ejecting the pressurized liquid through a small orifice such as a nozzle. By passing the pressurized liquid stream through a small orifice, high hydraulic pressures are induced. A first pressurized liquid stream is released through a first nozzle to form the first jet, and a second pressurized liquid stream is released through a second nozzle to form the second jet.

Herein, the term "making a first jet and a second jet to collide" denotes that the first jet and the second jet have a common collision point at which they collide, i.e. get into very intense contact. For example, a plate-shaped collision zone may be formed upon collision of the two jets. Suitably, the first jet and the second jet may collide with each other at an angle of 90 to 180° , preferably at an angle of about 180° .

Generally, the process of the invention is characterized by a short interaction time of the first jet and the second jet. Upon collision of the first jet and the second jet, a transient super-saturated solution is obtained, from which C-S-H seed precipitate. Without wishing to be bound by theory, we believe that it is favourable to withdraw the newly formed minute C-S-H particles from the interaction zone immediately after their formation in order to have a rapid nucleation of small C-S-H particles without significant particle growth. It is believed that a longer interaction time would result in broad particle size distributions and/or polymodal particle size distributions.

Rather, the super-saturated solution is forced to excrete newly formed C-S-H particles of small particle size.

For example, the primary calcium silicate hydrate seed composition is discharged from the interaction zone within a residence time of less than 1 s, preferably less than 300 ms, more preferably less than 100 ms. Herein, the residence time is defined as the time that elapses between the entry of the first jet and the second jet into the interaction zone and the exit of the primary calcium silicate hydrate composition from the interaction zone. The residence time may be conveniently calculated from the flow rates of the liquid streams and the volume of the interaction zone.

In an embodiment, the first pressurized liquid stream and/or the second pressurized liquid stream has a pressure in the range of from 10 to 200 bara, preferably 10 to 100 bara, more preferably 10 to 35 bara.

The diameter of the first nozzle and/or the second nozzle is not particularly limited. The diameter of the first nozzle and/or the second nozzle is selected such that a desired pressure buildup is maintained at a given flow rate. For example, it may be up to 5000 µm, preferably 50 to 2000 µm, more preferably 400 to 1400 µm. The diameter of the first nozzle and the second nozzle may be identical or different.

The process of the invention is suitably implemented using a continuous reactor based on highly pressurized jet streams, also referred to as "jet collision reactor" in the following. Such reactors are known, e.g. from C. Odenwald, Journal of Sol-Gel Science and Technology 2019, 89, 343-353; or DE 10 2017 110 292. A "jet collision reactor" is a unique device for mixing two liquid streams through nozzles of small diameters in an interaction zone enclosed by a housing and immediately removing the formed mixture from that zone through an outlet. The housing is typically provided with an inlet through which a gas such as nitrogen can be introduced so as to maintain a gaseous atmosphere within the reactor, notably the interaction zone of the two jets, as well as to decrease the residence time inside the reactor and optionally to cool the resulting products, and an outlet for withdrawal of the resulting products and excess gas out of the reactor housing. The jet collision reactor may have means for controlling the temperature of the liquids, the flow rate of the liquids and/or the amount of gas in the interaction zone where necessary. Jet collision reactor offer the advantage of short mixing times leading to a homogenous environment during the precipitation reaction and narrow size distributions.

The present inventors have found that passing nitrogen through the interaction zone is not necessary and provides no further benefit to the process of the present invention and hence is not preferred.

Preferably, the distance between the first nozzle and the second nozzle of the jet collision reactor may be less than 5 cm, preferably less than 3 cm, more preferably less than 1 cm.

In an embodiment, it is provided that the flow velocity of the jets downstream the nozzle are identical or different, and are above 2 m/s, preferably in the range of from 10 to 200 m/s, more preferably 20 to 80 m/s. Likewise, one of the liquid streams may have a higher flow velocity than the other liquid stream, e.g. 45 m/s on the one side and 47 m/s on the other side. However, the flow velocities of both liquid streams may also be equal.

The temperature range in which the process may be carried out is not especially limited. Certain limits are however imposed by the physical state of the system. In an embodiment, step (a) and/or step (b) are carried out at a temperature in the range of from 5 to 70 ° C, preferably 20 to 30 ° C.

Generally, the nozzles are manufactured from a metal, e.g. brass, stainless steel etc. The surface of the nozzle which is in contact with the pressurized liquid stream may preferably be protected, e.g. coated, in order to avoid or even to prevent abrasion of said surface which would disadvantageously lead to damage or destruction of the nozzle.

According to the invention, the first jet and the second jet are made to collide in the presence of an aqueous solution of at least one polymeric water-soluble dispersant. There are several possibilities to make the aqueous solution of at least one polymeric water-soluble dispersant be present at the collision point of the two jets.

In one embodiment, the aqueous solution of the polymeric water-soluble dispersant is comprised in at least one of the first jet and the second jet. In a preferred embodiment, the aqueous solution of the polymeric water-soluble dispersant is comprised in the first jet.

In an alternative embodiment, the aqueous solution of the polymeric water-soluble dispersant is introduced independently of the first jet and the second jet into the interaction zone. For example, the aqueous solution of the polymeric water-soluble dispersant can be introduced via the inlet provided in the housing of the jet collision reactor through which a gas such as nitrogen can be introduced.

In step (a) of the process of the invention, an aqueous solution of a calcium compound and an aqueous solution of a silicate compound are used. For this purpose, the calcium compound and the silicate compound have to be water-soluble to a certain extent. Preferably, the solubility of the calcium compound and of the silicate compound is higher than 0.1 g/L, more preferably 1 g/L in water at a temperature of 20 ° C and normal pressure. In principle, slightly water-soluble compounds are also suitable as water-soluble calcium compounds or water-soluble silicate compounds, although readily water-soluble compounds, i.e. compounds which dissolve completely or virtually completely in water, are preferred. However, it must be ensured there is a sufficient reactivity for the reaction in the aqueous environment with the corresponding reactant, i.e. either the water-soluble calcium compound or the water-soluble silicate compound. It is to be assumed that the reaction takes place between the water-soluble calcium compound and the water-soluble silicate compound in the aqueous solution. The reaction product, i.e. the calcium silicate hydrate seeds, are much less soluble in water compared to the reactants. Thus, the calcium silicate hydrate seeds precipitate. Typically, a majority of the platelet-shaped primary calcium silicate hydrate particles having a diameter of about 30 to 80 nm and a thickness of about 2 to 4 nm clusters to form aggregates. Generally, at least 80 wt.-% of the particles have a size below 1000 nm, preferably below 950 nm.

In an embodiment, the calcium compound is selected from calcium chloride, calcium nitrate, calcium formate, calcium acetate, calcium amidosulfonate, calcium thiocyanate, calcium bicarbonate, calcium bromide, calcium carbonate, calcium citrate, calcium chlorate, calcium fluoride, calcium gluconate, calcium hydroxide, calcium oxide, calcium hypochloride, calcium iodate, calcium iodide, calcium lactate, calcium nitrite, calcium oxalate, calcium phosphate, calcium propionate, calcium stearate, calcium sulfate, calcium sulfate hemihydrate, calcium sulfate dihydrate, calcium sulfide, calcium tartrate, calcium aluminate and mixtures thereof.

Preferably, the calcium compound is selected from calcium chloride and/or calcium nitrate. Advantage of these calcium compounds is their good solubility in water, low price and good availability.

As the silicate compound, alkali metal silicates of the following formula may be used:

m SiO₂ · n M₂O,

wherein M is an alkali metal, preferably Li, Na or K or a mixture thereof, and the molar ratio m:n (also termed "modulus") is 4.0 or less, preferably 3.0 or less, more preferably 2.0 or less, most preferably 1.70 or less. The molar ratio m:n is preferably 0.5 or more, more preferably 1.0 or more.

Useful silicates encompass the orthosilicates, pyrosilicates, metasilicates and mixtures thereof.

Preferably, the silicate compound is selected from sodium metasilicate and/or potassium metasilicate. Advantage of these silicate compounds is their extremely good solubility in water.

In industrial practice, aqueous solutions of alkali metal silicates, mainly in the form of alkali metal metasilicates, are generally referred to as waterglass. Waterglass is a preferred silicate compound for implementing the invention. Waterglass can be obtained by the reaction of alkali metal carbonates with quartz sand (silicon dioxide). However, they can also be produced from mixtures of reactive silicas with the appropriate aqueous alkali metal hydroxides.

The alkali metal silicate is preferably waterglass, more preferably an aqueous waterglass and most preferably a sodium waterglass or potassium waterglass. However, it is also possible to use lithium waterglass or ammonium waterglass or a mixture of the waterglasses mentioned. The m:n ratio stated above should preferably not be exceeded, since otherwise reaction of the components is likely to be incomplete. Waterglasses with higher moduli should be adjusted before use to moduli in the range of the invention by using a suitable aqueous alkali metal hydroxide.

Potassium waterglasses in the advantageous modulus range are mainly marketed as aqueous solutions because they are very hygroscopic; sodium waterglasses in the advantageous modulus range are also obtainable commercially as solids. The solids contents of commercially available aqueous waterglass solutions are generally from 20 to 60 wt.-%, preferably from 40 to 60 wt.-%.

Generally, the aqueous solution of the calcium compound contains 10 to 35 wt.-%, preferably 20 to 33 wt.-%, of the calcium compound.

Generally, the aqueous solution of the silicate compound contains 10 to 35 wt.-%, preferably 15 to 25 wt.-%, of the silicate compound.

The aqueous solution of the calcium compound or aqueous solution of the silicate compound, or the aqueous solution of the polymeric water-soluble dispersant if introduced independently of the former solutions may also contain one or more further solvents in addition to water, for example alcohols such as ethanol and/or isopropanol. Preferably, the weight proportion of the solvent other than water to the sum of water and further solvent, e.g. alcohol, is up to 20 wt.-%, more preferably less than 10 wt.-%, most preferably less than 5 wt.-%. However, most preferable are aqueous systems without any solvent.

In an embodiment, the molar ratio of calcium to silicon in the calcium silicate hydrate seed composition is in the range of from 0.6 to 2, preferably 1.1 to 1.8.

The calcium silicate hydrate composition contains calcium cations and silicate anions. Additionally, the calcium silicate hydrate composition may comprise further cations such as aluminum, alkali metals and alkaline earth metals. The calcium silicate hydrate composition can be described with regard to its composition by the following empirical formula:

a CaO, SiO₂, b Al₂O₃, c M₂O, d MeO, e TO, f H₂O;

wherein
M is an alkali metal such as Na,
Me is an alkaline earth metal such as Mg,
T is a transition metal such as Cu or Fe

| | | |
|---|---|---|
| 0.1 ≤ a ≤ 2 | preferably | 0.66 ≤ a ≤ 1.8, |
| 0 ≤ b ≤ 1 | preferably | 0 ≤ b ≤ 0.1, |
| 0 ≤ c ≤ 1 | preferably | 0 ≤ c ≤ 0.4, |
| 0 ≤ d ≤ 2 | preferably | 0 ≤ d ≤ 0.1, |
| 0 ≤ e ≤ 2 | preferably | 0 ≤ e ≤ 1, and |
| 0.5 ≤ f ≤ 20 | preferably | 1 ≤ f ≤ 6. |

In an embodiment, the first aqueous solution and/or the second aqueous solution may additionally contain further dissolved ions which such as dissolved aluminum salts and/or dissolved magnesium salts. As aluminum salts, preferably aluminum halogens, aluminum nitrate, aluminum hydroxide and/or aluminum sulfate can be used. More preferable within the group of aluminum halogens is aluminum chloride. Magnesium salts can be preferably magnesium nitrate, magnesium chloride and/or magnesium sulfate.

Advantage of the aluminum salts and magnesium salts is that defects in the calcium silicate hydrate can be created via the introduction of ions different to calcium and silicon. This leads to an improved hardening acceleration effect. Preferably, the molar ratio of aluminum and/or magnesium to calcium and silicon is small.

The seeding efficacy of the calcium silicate hydrate seeds is dependent on the structural analogy to the C-S-H gel that is naturally formed upon the hydration process of cement. The calcium silicate hydrate seeds of the invention may exist in the following crystalline phases or distorted versions thereof:
Typically, the calcium silicate hydrate in the calcium silicate hydrate seed composition is foshagite, hillebrandite, xonotlite, nekoite, clinotobermorite, 9Å-tobermorite (riversiderite), 11Å-tobermorite, 14Å-tobermorite (plombierite), jennite, metajennite, calcium chondrodite, afwillite, *α*-C₂SH, dellaite, jaffeite, rosenhahnite, killalaite and/or suolunite.

More preferably, the calcium silicate hydrate in the calcium silicate hydrate seed compositionis xonotlite, 9Å-tobermorite (riversiderite), 11Å-tobermorite, 14Å-tobermorite (plombierite), jennite, metajennite, afwillite and/or jaffeite.

Generally, the pH-value of the primary calcium silicate hydrate seed composition depends on the nature and quantity of the reactants, i.e. the calcium compound and the silicate compound. It is preferable that the pH value of the primary calcium silicate hydrate seed composition is higher than 8, preferably in the range of from 8 and 13.5.

According to the invention, the primary calcium silicate hydrate seed composition obtained in step (a) is subsequently subjected to a shearing treatment. It is believed that the shearing treatment causes a thin layer of the polymeric water-soluble dispersant being stably adsorbed on the surface of the calcium silicate hydrate seeds. The minute calcium silicate hydrate seeds are less energetically favored than larger particles. This stems from the fact that ions on the surface of the particle are not fully coordinated by counterions and are therefore energetically less stable than the ones in the interior. This property makes the calcium silicate hydrate seed composition desirable as hardening accelerator, but imposes an inherent instability on the composition. The layer of the polymeric water-soluble dispersant adsorbed on the surface of the calcium silicate hydrate seeds acts to prevent the minute particles from thermodynamically-driven rearrangement processes that may result in the formation of larger particles and disappearance of small particles.

The "shearing treatment" is not particularly limited; common shearing treatment techniques are well known to the skilled person. Suitable treatments include intensive mechanical mixing, ultrasonic treatment, homogenizer treatment or forcing the primary calcium silicate hydrate seed composition through a narrow gap or small orifice such as a nozzle.

In an embodiment, the shearing treatment of step (b) comprises releasing the primary calcium silicate hydrate seed composition through a third nozzle, preferably using a jet collision reactor. In other words, the primary calcium silicate hydrate seed composition is withdrawn from the first jet collision reactor and transported through a line to a further jet collision reactor having a third nozzle. In this case, the shearing treatment is accomplished when releasing the primary calcium silicate hydrate seed composition through the third nozzle. As noted above, a jet collision reactor includes two nozzles and, increase the throughput, the stream of the primary calcium silicate hydrate seed composition can be divided into two partial stream and one partial stream can be transported to and released through each of the two nozzles of the second jet collision reactor. The collision of the jets formed from the two partial streams can contribute to the shear, but that is not of critical importance.

In an embodiment, the pressure drop upon releasing the calcium silicate hydrate seed composition through the third nozzle is in the range of from 2 to 20 bara, preferably 2 to 10 bara.

In an alternative embodiment, the shearing treatment can be implemented simultaneously with step (a). This means that a second jet collision reactor is dispensable with. In this embodiment, the shearing treatment in step (b) comprises recycling the primary calcium silicate hydrate seed composition into the interaction zone. In this case, the primary calcium silicate hydrate seed composition may be recycled into the jet collision reactor through a separate opening, for example the inlet through which a gas such as nitrogen can be introduced as mentioned above. A shearing action on the recycled primary calcium silicate hydrate seed composition is exerted upon collision of the first jet and the second jet.

Preferably, the calcium silicate hydrate seeds present in the composition obtainable by the process of the present invention have a particle size distribution such that at least 80 wt.-% of the particles have a size below 1000 nm, preferably below 950 nm, more preferred below 800 nm, more preferably below 500 nm. Particle size distribution of the calcium silicate hydrate seeds is conveniently measured by dynamic light scattering using, e.g., a Zetasizer ZS (nano Series) device available from the company Malvern. The instrument can determine the size (diameter) of particles in the range of from 0.3 nm to 10 µm. C-S-H suspensions were diluted with its continuous phase (continuous water phase of a precipitated C-S-H sample in the absence of polymer) to a solids content of 1 wt.-%. The results of the DLS measurements show a monomodal particle size distribution of the samples synthesized using the continuous process, whereas the sample from the batch process show polydispersity of the particles/agglomerates.

In an embodiment, the calcium silicate hydrate seed composition has a solids content below 90 wt.-%, preferably in the range of from 10 to 30 wt.-%. The solids content is determined in an oven at 60 ° C until a constant weight of the sample is reached.

A solids content of the calcium silicate hydrate seed composition in the range of from 10 to 30 wt.-% is preferable due to the excellent storage stability of the calcium silicate hydrate seed composition.

In the event, that the calcium silicate hydrate seed composition is to be directly used, i.e. without the need of storage, the solids content may be in the range of from 5 to 90 wt.-%. In this case, the preparation of the calcium silicate hydrate seed composition may be carried out at a site of concrete production, for example at a ready-mix concrete plant, a precast concrete plant or any other plant where mortar, concrete or any other cementitious products are produced. The obtained calcium silicate hydrate seed composition may be used as the batching water.

Herein, the term "batching water" denotes water, which is used in concrete production or production of similar cementitious materials. Typically, the batching water is mixed with cement and, e.g., aggregates at a ready-mix concrete plant or precast concrete plant, at a construction site or any other place where concrete or other cementitious materials are produced. Usually the batching water can contain a wide range of additives such as plasticizers, hardening accelerators, retarders, shrinkage reducing additives, air entrainers and/or defoamers. It is advantageous to produce the calcium silicate hydrate seed composition in the batching water intended for production of concrete or similar materials, because there is no need to transport the respective admixtures in this case.

Preferably, the weight ratio of calcium silicate hydrate seeds to the polymeric water-soluble dispersant is in the range of from 0.5 to 3, preferably 1.5 to 2, in the calcium silicate hydrate seed composition, calculated on a solids basis.

In an embodiment, the polymeric water-soluble dispersant is selected from
- polycarboxylate ethers,
- phosphorylated polycondensates being obtainable by a condensation reaction of an aromatic compound having a phosphate moiety, an alkoxylated hydroxyaryl compound having a polyoxyalkylene chain, and formaldehyde,
- non-ionic polymers having a carbon-containing backbone to which are attached pendant hydrolysable groups and polyether side chains, the hydrolysable groups upon hydrolysis releasing ionic anchoring groups,
- sulfonated melamine-formaldehyde condensates,
- lignosulfonates,
- sulfonated ketone-formaldehyde condensates,
- sulfonated naphthalene-formaldehyde condensates,
- phosphonate containing dispersants, and
- mixtures thereof.

In a preferred embodiment, the dispersant is selected from polycarboxylate ethers; phosphorylated polycondensates being obtainable by a condensation reaction of an aromatic compound having a phosphate moiety, an alkoxylated hydroxyaryl compound having a polyoxyalkylene chain, and formaldehyde; and mixtures thereof.

Mixtures of polycarboxylate ethers and phosphorylated polycondensates being obtainable by a condensation reaction of an aromatic compound having a phosphate moiety, an alkoxylated hydroxyaryl compound having a polyoxyalkylene chain, and formaldehyde are particularly preferred.

The polycarboxylate ether has a carbon-chain backbone with anionic and/or anionogenic groups and polyoxyalkylene side chains having an average of 3 to 130 oxyalkylene units. The polycarboxylate ethers may be prepared by free radical polymerization of suitable *α* , *β* -ethylenically unsaturated monomers.

Anionogenic groups are the acid groups present in the polycarboxylate ether, which can be transformed to the respective anionic group under alkaline conditions.

Preferably, the anionic and anionogenic groups are carboxyl, carboxylate or phosphate groups, hydrogenphosphate or dihydrogenphosphate groups.

The polycarboxylate ether preferably comprises structural units of formulae (Ia), (Ib), (Ic) and/or (Id), which impart may anionic and/or anionogenic groups. The formulae (Ia), (Ib), (Ic) and/or (Id) may be identical or different both within individual polymer molecules and between different polymer molecules. 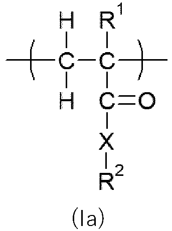 wherein
- R¹: is H, C₁-C₄ alkyl, CH₂COOH or CH₂CO-X-R^{3A}, preferably H or methyl;
- X: is NH-(Cₙ₁H₂ₙ₁) or O-(Cₙ₁H₂ₙ₁) with n1 = 1, 2, 3 or 4, the nitrogen atom or the oxygen atom being bonded to the CO group;
- R²: is OM, PO₃M₂, or O-PO₃M₂; or

- X: is a chemical bond and R² is OM;
- R^{3A}: is PO₃M₂, or O-PO₃M₂; 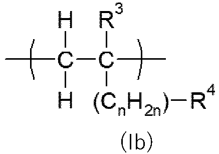
wherein
- R³: is H or C₁-C₄ alkyl, preferably H or methyl;
- n: is 0, 1, 2, 3 or 4;
- R⁴: is PO₃M₂, or O-PO₃M₂; 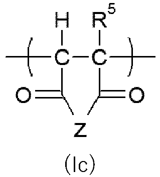
wherein
- R⁵: is H or C₁-C₄ alkyl, preferably H;
- Z: is O or NR⁷;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂, and
- n1: is 1, 2, 3 or 4; 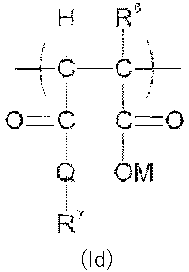
wherein
- R⁶: is H or C₁-C₄ alkyl, preferably H;
- Q: is NR⁷ or O;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂,
- n1: is 1, 2, 3 or 4; and
where each M independently is H or a cation equivalent.

Preferably, the polycarboxylate ether comprises structural units of the formula (la) wherein R¹ is H or methyl; and/or at least one structural unit of the formula (Ib) wherein R³ is H or methyl; and/or at least one structural unit of the formula (Ic) wherein R⁵ is H or methyl and Z is O; and/or at least one structural unit of the formula (Id) wherein R⁶ is H and Q is O.

Preferably, the polycarboxylate ether comprises as structural units of the formula (la) wherein R¹ is H or methyl and XR² is OM or X is O(CₙH₂ₙ) with n1 = 1, 2, 3 or 4, more particularly 2, and R² is O-PO₃M₂.

With particular preference, the structural unit of formula (la) is a methacrylic acid or acrylic acid unit, the structural unit of formula (Ic) is a maleic anhydride unit, and the structural unit of formula (Id) is a maleic acid or maleic monoester unit.

In the case that the monomers (I) are phosphoric esters or phosphonic esters, they may also include the corresponding diesters and triesters and also the monoester of diphosphoric acid. In general, these esters come about during the esterification of organic alcohols with phosphoric acid, polyphosphoric acid, phosphorus oxides, phosphorus halides or phosphorus oxyhalides, and/or the corresponding phosphonic acid compounds, alongside the monoester, in different proportions, as for example 5 to 30 mol-% of diester and 1 to 15 mol-% of triester and also 2 to 20 mol-% of the monoester of diphosphoric acid.

The polycarboxylate ether may comprise structural units of the formulae (Ila), (IIb), (IIc) and/or (IId), which impart polyether side chains. The formulae (Ila), (IIb), (Ilc) and/or (Ild) may be identical or different not only within individual polymer molecules but also between different polymer molecules. All structural units A as defined below may be identical or different both within individual polyether side chains and between different polyether side chains. 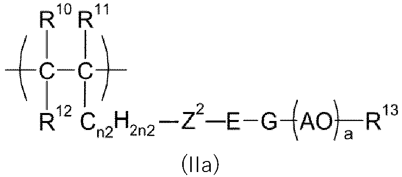 wherein
- R¹⁰, R¹¹: and R¹² independently of one another are H or C₁-C₄ alkyl, preferably H or methyl;
- Z²: is O or S;
- E: is C₂-C₆ alkylene, cyclohexylene, CH₂-C₆H₁₀, 1,2-phenylene, 1,3-phenylene or 1,4-phenylene;
- G: is O, NH or CO-NH; or
- E and G: together are a chemical bond;
- A: is C₂-C₅ alkylene or CH₂CH(C₆H₅), preferably C₂-C₃ alkylene;
- n2: is 0, 1, 2, 3, 4 or 5;
- a: is an integer from 3 to 130;
- R¹³: is H, an unbranched or branched C₁-C₄ alkyl group, CO-NH₂ or COCH₃;

Preferably, the structural unit of formula (IIa) is an alkoxylated isoprenyl unit, alkoxylated hydroxybutyl vinyl ether unit, alkoxylated (meth)allyl alcohol unit or a vinylated methylpolyalkylene glycol unit, in each case preferably with an arithmetic average of 3 to 130 oxyalkylene groups. 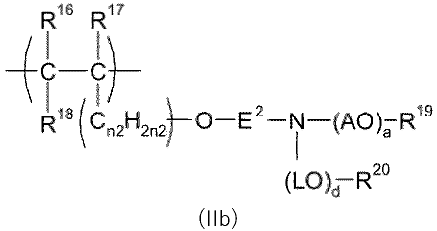 wherein
- R¹⁶, R¹⁷ and R¹⁸: independently of one another are H or C₁-C₄ alkyl, preferably H;
- E²: is C₂-C₆ alkylene, cyclohexylene, CH₂-C₆H₁₀, 1,2-phenylene, 1,3-phenylene, or 1,4-phenylene, or is a chemical bond;
- A: is C₂-C₅ alkylene or CH₂CH(C₆H₅), preferably C₂-C₃ alkylene;
- n2: is 0, 1, 2, 3, 4 or 5;
- L: is C₂-C₅ alkylene or CH₂CH(C₆H₅), preferably C₂-C₃ alkylene;
- a: is an integer from 3 to 130;
- d: is an integer from 3 to 130;
- R¹⁹: is H or C₁-C₄ alkyl; and
- R²⁰: is H or C₁-C₄ alkyl; 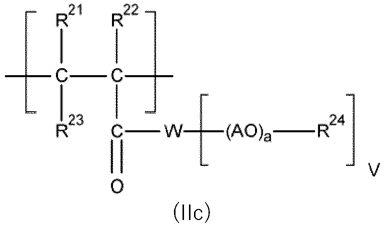
wherein
- R²¹, R²² and R²³: independently are H or C₁-C₄ alkyl, preferably H;
- W: is O, NR²⁵, or is N;
- V: is 1 if W = O or NR²⁵, and is 2 if W = N;
- A: is C₂-C₅ alkylene or CH₂CH(C₆H₅), preferably C₂-C₃ alkylene;
- a: is an integer from 3 to 130;
- R²⁴: is H or C₁-C₄ alkyl;
- R²⁵: is H or C₁-C₄ alkyl; 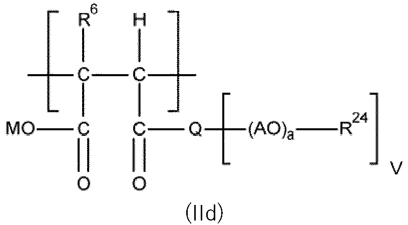
wherein
- R⁶: is H or C₁-C₄ alkyl, preferably H;
- Q: is NR¹⁰, N or O;
- V: is 1 if Q = O or NR¹⁰ and is 2 if Q = N;
- R¹⁰: is H or C₁-C₄ alkyl;
- R²⁴: is H or C₁-C₄ alkyl;
- A: is C₂-C₅ alkylene or CH₂CH(C₆H₅), preferably C₂-C₃ alkylene; and
- a: is an integer from 3 to 130;
where each M independently is H or a cation equivalent.

Besides the structural units of the formulae (I) and (II), the polycarboxylate ether may also comprise further structural units, which are derived from radically polymerizable monomers, such as hydroxyethyl (meth)acrylate, hydroxypropyl (meth)acrylate, (meth)acrylamide, (C₁-C₄) alkyl (meth)acrylates, styrene, styrenesulfonic acid, 2-acrylamido-2-methylpropanesulfonic acid, (meth)allylsulfonic acid, vinylsulfonic acid, vinyl acetate, acrolein, N-vinylformamide, vinylpyrrolidone, (meth)allyl alcohol, isoprenol, 1-butyl vinyl ether, isobutyl vinyl ether, aminopropyl vinyl ether, ethylene glycol monovinyl ether, 4-hydroxybutyl monovinyl ether, (meth)acrolein, crotonaldehyde, dibutyl maleate, dimethyl maleate, diethyl maleate, dipropyl maleate, etc.

The polycarboxylate ether comprising the structural units (I) and (II) may be prepared by conventional methods, for example by free radical polymerization or controlled radical polymerization as, e.g., described in EP 0 894 811, EP 1 851 256, EP 2 463 314, and EP 0 753 488.

Suitably, such polycarboxylate ether has a weight-average molecular weight of 5000 to 200000 g/mol, preferably 10000 to 80000 g/mol, more preferably 20000 to 70000 g/mol. The weight-average molecular weight is preferably measured by gel permeation chromatography (GPC) according to the details given in the experimental part (methods).

Preferably, the polycarboxylate ether comprises:
(a) at least one structural unit of the formula (IIa) wherein R¹⁰ and R¹² are H, R¹¹ is H or methyl, E and G together are a chemical bond, A is C₂-C₃ alkylene, a is 3 to 130, and R¹³ is H or an unbranched or branched C₁-C₄ alkyl group; and/or
(b) at least one structural unit of the formula (IIb) wherein R¹⁶ and R¹⁸ are H, R¹⁷ is H or methyl, E² is an unbranched or branched C₂-C₆ alkylene group, A is C₂-C₃ alkylene, L is C₂-C₃ alkylene, a is an integer from 3 to 130, d is an integer from 3 to 130, R¹⁹ is H or an unbranched or branched C₁-C₄ alkyl group, and R²⁰ is H or an unbranched or branched C₁-C₄ alkyl group; and/or
(c) at least one structural unit of the formula (IIc) wherein R²¹ and R²³ are H, R²² is H or methyl, A is C₂-C₃ alkylene, a is an integer from 3 to 130, and R²⁴ is H or an unbranched or branched C₁-C₄ alkyl group; and/or
(d) at least one structural unit of the formula (Ild) wherein R⁶ is H, Q is O, A is C₂-C₃ alkylene, and a is an integer from 3 to 130.

The polycarboxylate ether may comprise at least one structural unit of the formula (IIa) and/or (IIc).

The polycarboxylate ether may comprise structural units of the formulae (I) and (II), e.g. of the formulae (la) and (Ila), or of the formulae (la) and (IIc), or of the formulae (Ic) and (Ila), or of the formulae (la), (Ic) and (Ila).

Preferably, the polycarboxylate ether may comprise units of (I) and (II) according to embodiments 1 to 3 of the following table:

| # | (I) | (II) |
|---|---|---|
| 1 | hydroxyethyl acrylate phosphoric acid ester and/or hydroxyethyl methacrylate phosphoric acid ester | C₁-C₄ alkyl-polyethylene glycol acrylic acid ester and/or C₁-C₄ alkyl-polyethylene glycol methacrylic acid ester |
| 2 | acrylic acid and/or methacrylic acid | C₁-C₄ alkyl-polyethylene glycol acrylic acid ester and/or C₁-C₄ alkyl-polyethylene glycol methacrylic acid ester |
| 3 | acrylic acid, methacrylic acid and/or maleic acid | vinyloxy-C₂-C₄ alkylene-polyethylene glycol, allyloxy-polyethylene glycol, methallyloxy-polyethylene glycol and/or isoprenyloxy-polyethylene glycol |

More preferably, the polycarboxylate ether may comprise units of (I) and (II) according to embodiments 4 to 13 of the following table:

| # | (I) | (II) |
|---|---|---|
| 4 | hydroxyethyl methacrylate phosphoric acid ester | C₁-C₄ alkyl-polyethylene glycol methacrylic acid ester or polyethylene glycol methacrylic acid ester |
| 5 | methacrylic acid | C₁-C₄ alkyl-polyethylene glycol methacrylic acid ester or polyethylene glycol methacrylic acid ester |
| 6 | acrylic acid and maleic acid | vinyloxy-C₂-C₄ alkylene-polyethylene glycol |
| 7 | acrylic acid and maleic acid | isoprenyloxy-polyethylene glycol |
| 8 | acrylic acid | vinyloxy-C₂-C₄ alkylene-polyethylene glycol |
| 9 | acrylic acid | isoprenyloxy-polyethylene glycol |
| 10 | acrylic acid | methallyloxy-polyethylene glycol |
| 11 | maleic acid | isoprenyloxy-polyethylene glycol |
| 12 | maleic acid | allyloxy-polyethylene glycol |
| 13 | maleic acid | methallyloxy-polyethylene glycol |

Suitably, the molar ratio of structural units (I) to structural units (II) varies from 1:3 to about 10:1, preferably 1:1 to 10:1, more preferably 3:1 to 6:1.

The polycarboxylate ether may be an aqueous product in the form of a solution, emulsion or dispersion or in solid form, for example as a powder, after a drying step. In the latter case, the water content is preferably less than 10% by weight, more preferably less than 5% by weight. Suitably, a part of the water, e.g. at least 10% by weight, may be replaced by organic solvents, e.g. alcohols such as ethanol, (iso)propanol and 1-butanol, including its isomers, or ketones such as acetone. By the use of the organic solvents, it is possible to influence the solubility and hence the crystallization behavior of the polycarboxylate ether.

The polycarboxylate ether may have a charge density of 0.5 to 2.7 meq/g, preferably 0.7 to 2.5 meq/g, of polymer. The milliequivalent number refers to carboxyl groups or carboxyl groups releasable from anionogenic groups contained in these components, assuming that all carboxyl groups are in unneutralized form.

The phosphorylated polycondensate is obtainable by a condensation reaction of
(1) an aromatic compound having a phosphate moiety,
(2) an alkoxylated hydroxyaryl compound having a polyoxyalkylene chain with 3 to 130 oxyalkylene units, and
(3) formaldehyde,
in a weight ratio of (1) : (2) of 2 : 98 to 40 : 60, preferably 5 : 95 to 30 : 70, more preferably 10 : 90 to 20 : 80.

The aromatic compound having a phosphate moiety (1) may be represented by formula (II): 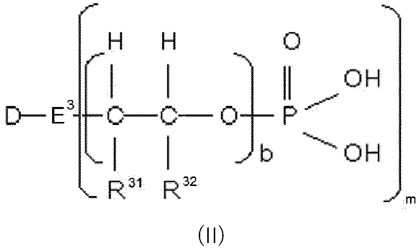 wherein, in formula (II),
D is a substituted or unsubstituted aromatic or heteroaromatic compound having 5 to 10 carbon atoms,
E³ is N, NH or O,
m = 2 if E³ = N and m = 1 if E³ = NH or O,
R³¹ and R³², independently of one another, are identical or different and are represented by a branched or straight-chain C₁- to C₁₀-alkyl radical, C₅- to C₈-cycloalkyl radical, aryl radical, heteroaryl radical or H, and
b are identical or different and are represented by an integer from 0 to 300.

Suitably, moiety D is represented by phenyl, 2-hydroxy¬phenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxy-naphthyl, 4-methoxynaphthyl, preferably phenyl.

Preferably, moiety E³ is represented by O.

Suitably, the substituents R³¹ and R³² may be chosen independently of one another and are preferably represented by H, methyl, ethyl or phenyl, more preferably by H or methyl, most preferably by H.

Suitably, b is an integer from 0 to 10, preferably 1 to 7, more preferably 1 to 5. The respective substituents, the length of which is defined by b, may consist of uniform building blocks, but a mixture of different building blocks may also be expedient. Furthermore, the substituents may each have the same chain length, b being represented by a number. As a rule, however, it will be expedient if mixtures having different chain lengths are present in each case so that the radicals of the monomers or structural units in the polycondensate have different numerical values for b.

The alkoxylated hydroxyaryl compound (2) is a hydroxyaryl compound having a polyoxyalkylene chain with 3 to 130, preferably 5 to 100, more preferably 8 to 80 oxyalkylene units.

Herein, the term "alkoxylated hydroxyaryl compound" denotes a compound having an aromatic core and at least one hydroxyl group directly attached to the aromatic core. The alkoxylated hydroxyaryl compound (2) may have one or more further substituents as long as the presence of such substituents does not interfere with the condensation reaction of the alkoxylated hydroxyaryl compound (2) and formaldehyde (3). In an embodiment, the hydroxyaryl compound (2) is selected from unsubstituted or monosubstituted phenols, and unsubstituted or monosubstituted naphthols. Suitably, the phenols and naphthols may be monosubstituted with a substituent selected from alkyl groups and carboxylic groups. Suitable naphthols are selected from 1-naphthol and 2-naphthol. Suitable alkyl-substituted phenols are selected from ortho-cresol, meta-cresol and para-cresol. Suitable carboxylic-substituted phenols are selected from gallic acid and salicylic acid.

Herein, the term "oxyalkylene units" refers to a repeating unit of general formula (A-1):

-[-R-O-]- (A-1)

wherein R denotes a linear or branched alkylene unit having at least 2 carbon atoms, preferably 2 to 4 carbon atoms. The polyoxyalkylene chain may comprise identical or different oxyalkylene units. Different oxyalkylene units may be arranged either in a random or a block-wise fashion. Preferably, the oxyalkylene unit is an oxyethylene group (-CH₂-CH₂-O-) and/or an oxypropylene group (-CH(CH₃)-CH₂-O- and/or -CH₂-CH(CH₃)-O-), preferably an oxyethylene group.

The alkoxylated hydroxyaryl compounds (2) may be obtained by reaction of hydroxyaryl compounds with alkylene oxides such as ethylene oxide or propylene oxide. The alkylene oxides introduce one or more divalent oxyalkylene groups into the hydroxyaryl compounds, e.g. into the phenol molecule. Such alkylene oxide residue is then interposed between the hydroxyl group oxygen atom and its hydrogen atom.

Generally, such an alkoxylated compound may be a single compound. However, usually, it is a mixture of compounds in which the numbers of oxyalkylene groups in the compounds are present as a distribution. That is that the number of 3 to 130 oxyalkylene units per polyoxyalkylene chain represents an average value of oxyalkylene units per polyoxyalkylene chain.

In an embodiment, the polyoxyalkylene units comprise at least 60 mol-%, preferably at least 85 mol-%, more preferably at least 95 mol-% of oxyethylene units.

In an embodiment, the alkoxylated hydroxyaryl compound (2) is an ethoxylated phenol. The term "ethoxylated phenol" denotes a hydroxyaryl compound that has been reacted with ethylene oxide to yield a polyoxyalkylene chain consisting of 100% oxyethylene units.

Suitably, such ethoxylated phenol is prepared by an ethoxylation reaction of phenol, or phenoxyethanol using ethylene oxide. Generally, such a phenoxyethanol precursor may be produced by a hydroxyethylation reaction of phenol using ethylene oxide, e.g. by a Williamson ether synthesis. Said phenoxyethanol precursor carries a hydroxyethyl moiety at the phenolic hydroxyl group oxygen atom at which a (poly)-oxyethylene chain may subsequently be attached.

That is, for the preparation of the phosphorylated polycondensate, components (1) and (2) are reacted with formaldehyde (3). Suitably, the formaldehyde (3) is added in form of a 37% formaldehyde solution in water. Formaldehyde (3) is present in at least a stoichiometric amount, that is, formaldehyde (3) is used in a molar amount equal to the sum of the molar amounts of (1) and (2). Formaldehyde (3) may be used in excess of the stoichiometric amount.

Suitably, the phosphorylated polycondensate has a weight-average molecular weight of 4000 g/mol to 150000 g/mol, preferably 20000 to 75000 g/mol. The weight-average molecular weight is preferably measured by gel permeation chromatography (GPC)according to the details given in the experimental part (methods).

The condensation reaction of the compounds (1), (2) and (3) can be carried out according to processes known per se.

The phosphorylated polycondensate may be present as an aqueous solution containing 35 to 75% by weight of water and 25 to 65% by weight of dissolved dry matter, preferably 40 to 60% by weight of water and 40 to 60% by weight of dissolved dry matter, more preferably 45 to 55% by weight of water and 45 to 55% by weight of dissolved dry matter. The dry matter consists essentially of the anhydrous phosphorylated polycondensate.

The phosphate containing dispersant may have a charge density of 0.5 to 2.7 meq/g, preferably 0.7 to 2.5 meq/g, of polymer. The milliequivalent number refers to carboxyl groups or carboxyl groups releasable from anionogenic groups contained in these components, assuming that all carboxyl groups are in unneutralized form.

Suitable sulfonated melamine-formaldehyde condensates are of the kind frequently used as plasticizers for hydraulic binders (also referred to as MFS resins). Sulfonated melamine-formaldehyde condensates and their preparation are described in, for example, CA 2 172 004 A1, DE 44 1 1 797 A1, US 4,430,469, US 6,555,683 and CH 686 186 and also in Ullmann's Encyclopedia of Industrial Chemistry, 5th Ed., vol. A2, page 131, and Concrete Admixtures Handbook - Properties, Science and Technology, 2. Ed., pages 411, 412. Preferred sulfonated melamine-formaldehyde condensates encompass (greatly simplified and idealized) units of the formula (VI) 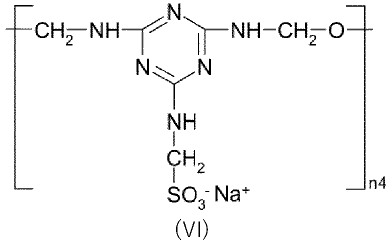 wherein n4 generally stands for 10 to 300. The molecular weight is situated preferably in the range from 2500 to 80000 g/mol. Additionally, to the sulfonated melamine units it is possible for other monomers to be incorporated by condensation. Particularly suitable is urea. Moreover, further aromatic units as well may be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. An example of melaminesulfonate-formaldehyde condensates are the Melment^{®} products distributed by Master Builders Solutions Deutschland GmbH.

Suitable lignosulfonates are products which are obtained as by-products in the paper industry. They are described in Ullmann's Encyclopedia of Industrial Chemistry, 5th Ed., vol. A8, pages 586, 587. They include units of the highly simplified and idealizing formula (VII)

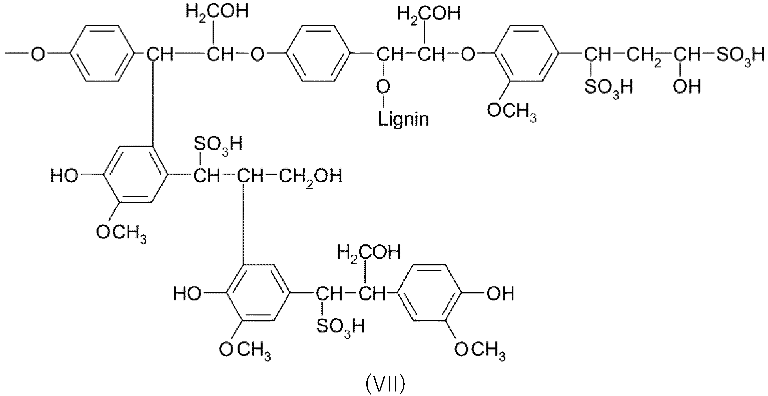

Lignosulfonates have molecular weights of between 2000 and 100000 g/mol. In general, they are present in the form of their sodium, calcium and/or magnesium salts. Examples of suitable lignosulfonates are the Borresperse products distributed by Borregaard LignoTech, Norway.

Suitable sulfonated ketone-formaldehyde condensates are products incorporating a monoketone or diketone as ketone component, preferably acetone, butanone, pentanone, hexanone or cyclohexanone. Condensates of this kind are known and are described in WO 2009/103579, for example. Sulfonated acetone-formaldehyde condensates are preferred. They generally comprise units of the formula (VIII) (according to J. Plank et al., J. Appl. Poly. Sci. 2009, 2018-2024): 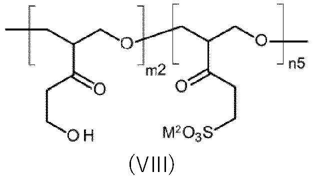 wherein m2 and n5 are generally each 10 to 250, M² is an alkali metal ion, such as Na⁺, and the ratio m2:n5 is in general in the range from about 3:1 to about 1:3, more particularly about 1.2:1 to 1:1.2. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated acetone-formaldehyde condensates are the Melcret K1L products distributed by Master Builders Solutions Deutschland GmbH.

Suitable sulfonated naphthalene-formaldehyde condensates are products obtained by sulfonation of naphthalene and subsequent polycondensation with formaldehyde. They are described in references including Concrete Admixtures Handbook - Properties, Science and Technology, 2. Ed., pages 411 -413 and in Ullmann's Encyclopedia of Industrial Chemistry, 5th Ed., vol. A8, pages 587, 588. They comprise units of the formula (IX)

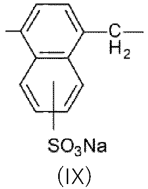

Typically, molecular weights (MW) of between 1000 and 50000 g/mol are obtained. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated β-naphthalene-formaldehyde condensates are the Melcret 500 L products distributed by Master Builders Solutions Deutschland GmbH.

Generally, phosphonate containing dispersants incorporate phosphonate groups and polyether side groups.

Suitable phosphonate containing dispersants are those according to the following formula (X)

R-(OA²)ₙ₆-eN-[CH₂-PO(OM³₂)₂]₂ (X)

wherein
- R: is H or a hydrocarbon residue, preferably a C₁-C₁₅ alkyl radical,
- A²: is independently C₂-C₁₈ alkylene, preferably ethylene and/or propylene, most preferably ethylene,
- n6: is an integer from 5 to 500, preferably 10 to 200, most preferably 10 to 100, and
- M³: is H, an alkali metal, 1/2 alkaline earth metal and/or an amine.

In an embodiment an alkanolamine selected from the group of triisopropanolamine and methyl diethanolamine is present i) in the first jet or in the second jet of the process step a) or ii) is added before or after the shearing treatment of process step b) to the primary calcium silicate hydrate seed composition obtained in step a).

The presence of the alkanolamines selected from the group of triisopropanolamine and methyl diethanolamine in the calcium silicate hydrate seed compositions improves the early strength development even further.

In an embodiment, the hardening accelerator composition comprises a synergistically active ratio of the C-S-H seed component and the alkanolamine. By synergism is meant in this connection an increased overall effect which exceeds, in the desired direction, the purely cumulative individual effects of the C-S-H seed composition and the alkanolamine.

The calcium silicate hydrate (C-S-H) composition contains water, the polymeric water-soluble dispersant, the counterions of the calcium compound (i.e. nitrate) and the silicate compound (i.e. sodium) and the calcium silicate hydrate seeds, which are the main active component for the acceleration effect. Optionally other components like for example alkanolamines can be present.

In an embodiment, the hardening accelerator composition has a weight ratio of the alkanolamine selected from the group of triisopropanolamine and methyl diethanolamine to the calcium silicate hydrate seeds in the range of from 0.07 to 2.4, preferably 0.07 to 1.89, more preferably 0.19 to 0.5, calculated on a solids basis.

The present invention can be further explained and illustrated on the basis of the following figures and examples.

### Examples

### Methods

Weight-average molecular weight values have been determined by gel permeation chromatography (GPC). As a stationary phase, a sequence of 3 columns PSS MCX, 5 µm, 1000 Å, ID 8.0 mm x 300 mm (available from PSS), conditioned at 40 ° C, has been used. As a mobile phase, an eluent of 80 vol.-% of an aqueous solution of Na₂HPO₄ (0.07 mol/L) and 20 vol.-% of acetonitrile has been used. The injection volume was 100 µL at a flow rate of 1.0 mL/min. The molecular weight calibration was performed with polystyrene sulfonate standards for RI detector (standards available from PSS Polymer Standards Service).

### Materials

As polymeric water-soluble dispersants, the following polymers were used:
Glenium^{®} ACE30 is a commercially available polycarboxylate ether (obtainable from BASF Italia S.p.A.) based on the monomers maleic acid, acrylic acid, vinyloxybutyl-polyethyleneglycol 5800 (Mw = 40.000 g/mol, solids content 45 wt.-%).

### Preparation of phosphorylated polycondensate

A reactor, equipped with heating and stirrer is charged with 175 g of a polyethyleneglycol monophenylether (Mn 3500), 36.8 g of a polyethyleneglycol monophenylether phosphate with 4 to 5 ethylene glycol units in average, and 6.3 g of paraformaldehyde. The reaction mixture is heated to 100 ° C and the polycondensation is started by the addition of 14 g of methane sulfonic acid. The reaction mixture is stirred for 360 min. The polycondensate is then diluted with water and neutralized to obtain a solution with 43.4 wt.-% solid content and a molecular weight of 27680 g/mol.

Precursor solution 1 and precursor solution 2 were prepared by homogenizing the components as shown below:
Precursor solution 1 was prepared as follows: To 93.5 g of a mixed polymer solution (Glenium^{®} ACE30 and the phosphorylated polycondensate prepared as described above, weight ratio 2.86 : 1, based on solids content of polymer solutions), 258.4 g of 51 wt.-% aqueous Ca(NO₃)₂ was added under stirring. The resulting mixture was diluted with 215.6 g of water obtaining 567.5 g of precursor solution 1.

Precursor solution 2 was prepared as follows: To 462.2 g of water at 40 ° C, 105.3 g of solid sodium metasilicate pentahydrate was added under stirring. The resulting mixture was stirred for 1 h until complete dissolution of the solids obtaining 567.5 g of precursor solution 1.

### Example according to the invention

A series of two microjet reactors connected in series, manufactured by nanoSaar GmbH was used. Said device has two nozzles each of which has an associated high pressure pump and feed line for injecting a liquid medium into the reactor.

The Ca(NO₃)₂-containing precursor solution 1 and the sodium metasilicate pentahydrate-containing precursor solution 2 were pressurized and transported to the first microjet reactor and ejected through nozzles with a diameter of 800 µm/800 µm symmetrical nozzle size. No gas flow through the reactor was adopted. The primary calcium silicate hydrate seed composition was withdrawn from the first microjet reactor and the stream was divided into two partial streams which were introduced into a second microjet reactor having two nozzles with a diameter of 1400 µm/1400 µm symmetrical nozzle size. The calcium silicate hydrate seed composition was withdrawn from the second microjet reactor and collected.

Flow-rates, pressures and amounts of the first pressurized liquid stream and the second pressurized liquid stream are shown in table 1 below. By this procedure, C-S-H seed compositions 1 to 18 were prepared. Their specifications are shown in table 2.

**Table 1: Reaction condition for the preparation of calcium silicate hydrate seed compositions.**

| **#** | **flow rate Ca-stream** ^{[1]} | **pressure Ca-stream** ^{[1]} | **weight Ca-stream** ^{[1]} | **flow rate Si-stream** ^{[2]} | **pressure Si-stream** ^{[2]} | **weight Si-stream** ^{[2]} | **pressure shearing** | **time** |
|---|---|---|---|---|---|---|---|---|
| | **[L/min]** | **[bar]** | **[kg]** | **[L/min]** | **[bar]** | **[kg]** | **[bar]** | **[min]** |
| 1 | 1.60 | 25 | 15.3 | 1.63 | 24 | 14.3 | about 3.5 to 5 | 7.5 |
| 2 | 1.65 | 26 | 14.3 | 1.69 | 25 | 13.4 | 8 | 6.8 |
| 3 | 1.65 | 24 to 35 | 13.3 | 1.69 | 25 to 37 | 12.5 | 8 | 6.5 |
| 4 | 1.75 | 29 to 30 | 112.5 | 1.79 | 29 to 30 | 105.8 | about 4 to 5 | 6.0 |
| 5 | 1.75 | 29 to 30 | 112.5 | 1.79 | 29 to 30 | 105.8 | about 4 to 5 | 6.0 |
| 6 | 1.75 | 29 to 30 | 112.5 | 1.79 | 29 to 30 | 105.8 | about 4 to 5 | 3.0 |
| 7 | 1.75 | 29 to 30 | 112.5 | 1.79 | 29 to 30 | 105.8 | about 4 to 5 | 6.0 |
| 8 | 1.75 | 35 to 37 | 112.5 | 1.79 | 35 to 37 | 105.8 | 5 | 3.0 |
| 9 | 1.75 | 35 to 37 | 112.5 | 1.79 | 35 to 37 | 105.8 | 4 | 7.5 |
| 10 | 1.75 | 37 to 33 | 112.5 | 1.79 | 37 to 33 | 105.8 | 4 | 6.0 |
| 11 | 1.75 | 40 to 50 | 112.5 | 1.79 | 40 to 50 | 105.8 | 4 | 5.5 |
| 12 | 1.75 | 49 to 53 | 112.5 | 1.79 | 50 to 55 | 105.8 | 4 | 2.5 |
| 13 | 1.80 | 29 to 30 | 13.4 | 1.84 | 29 to 30 | 12.6 | about 4.5 to 5 | 6.0 |
| 14 | 1.80 | 29 to 30 | 13.3 | 1.84 | 29 to 30 | 12.5 | about 4.5 to 5 | 6.0 |
| 15 | 1.80 | 29 to 30 | 11.1 | 1.84 | 29 to 30 | 10.5 | 5 | 5.0 |
| 16 | 1.80 | 29 to 30 | 10.1 | 1.84 | 29 to 30 | 9.5 | 5 | 4.5 |
| 17 | 1.80 | 33 to 37 | 11.1 | 1.84 | 33 to 37 | 10.5 | 5 | 5.0 |
| 18 | 1.80 | 36 to 39 | 6.3 | 1.84 | 36 to 39 | 5.9 | 5 | 3.0 |

| | | | | | | | | |
|---|---|---|---|---|---|---|---|---|
| [1] First pressurized liquid stream of precursor solution 1 [2] Second pressurized liquid stream of precursor solution 2 | | | | | | | | |

**Table 2: Specifications of the prepared calcium silicate hydrate seed compositions of table 1.**

| **#** | **pH** | **consistency** | **solids content** | **viscosity after preparation** | **viscosity after 1 d** | **viscosity after 7 d** | **sedimentation after 7 d** |
|---|---|---|---|---|---|---|---|
| | | | **[wt.-%]** | **[mPa·s]** | **[mPa.s]** | **[mPa·s]** | |
| 1 | 10.7 | milky, homogeneous | 21.9 | n.d. ^{[1]} | 294 | 232 | no |
| 2 | 10.8 | milky, homogeneous | 22.1 | n.d. ^{[1]} | 240 | 213 | no |
| 3 | 10.8 | milky, homogeneous | 21.9 | n.d. ^{[1]} | 180 | 175 | no |
| 4 | 10.8 | milky, homogeneous | 21.9 | n.d. ^{[1]} | 364 | 341 | no |
| 5 | 10.8 | milky, homogeneous | 21.9 | n.d. ^{[1]} | 364 | 341 | no |
| 6 | 10.8 | milky, homogeneous | 21.9 | n.d. ^{[1]} | 364 | 341 | no |
| 7 | 10.8 | milky, homogeneous | 21.9 | n.d. ^{[1]} | 364 | 634 | no |
| 8 | 10.8 | milky, homogeneous | 22.0 | n.d. ^{[1]} | 614 | 604 | no |
| 9 | 10.8 | milky, homogeneous | 22.0 | n.d. ^{[1]} | 614 | 604 | no |
| 10 | 10.8 | milky, homogeneous | 22.0 | n.d. ^{[1]} | 614 | 604 | no |
| 11 | 10.8 | milky, homogeneous | 22.2 | n.d. ^{[1]} | 678 | 851 | no |
| 12 | 10.8 | milky, homogeneous | 22.2 | n.d. ^{[1]} | 709 | 975 | no |
| 13 | 10.8 | milky, homogeneous | 20.1 | 839 | 693 | 572 | no |
| 14 | 10.8 | milky, homogeneous | 20.1 | 839 | 693 | 572 | no |
| 15 | 10.8 | milky, homogeneous | 20.1 | 839 | 693 | 572 | no |
| 16 | 10.8 | milky, homogeneous | 20.1 | 839 | 693 | 572 | no |
| 17 | 10.8 | milky, homogeneous | 20.5 | 1667 | 1390 | 1166 | no |
| 18 | 10.8 | milky, homogeneous | 20.5 | 1667 | 1390 | 1166 | no |

| | | | | | | | |
|---|---|---|---|---|---|---|---|
| [1] n.d. = not determined | | | | | | | |

The results of table 2 show that all calcium silicate hydrate seed compositions 1 to 18 are homogeneous and have a milky consistency. No sedimentation occurs with the inventive compositions after storage for 7 days.

### Testing procedure - early strength development of concrete

The concrete mixes (table 3) were each filled into concrete steel cubes (15/15/15cm), and after 6 h, 9h, 16 h and 24 h at a temperature of 20 ° C and relative humidity of 65 %, a hardened concrete cube was obtained. The hardened concrete cube was demolded, and the compressive strength was measured according to DIN EN 12390-3.

### Testing procedure - Monitoring hydration evolution for cement pastes (calorimetry)

The hydration evolution of the cement pastes was measured using isothermal heat flow calorimetry. TAM Air from TA Instruments was used for measuring the development of the heat of hydration over time of samples containing either only the calcium silicate hydrate seed composition or a combination of the calcium silicate hydrate seed composition and triisopropanolamine (TIPA). The cement Milke CEM I 52.5 R was used for the calorimetry test. The water to cement ratio was 0.5 and the dosage of the accelerator suspensions was 4 % by weight of cement. The weight ratio of the mix of the calcium silicate hydrate seed composition and triisopropanolamine (TIPA) was 90 : 10. The TIPA solution active content was 95 %.

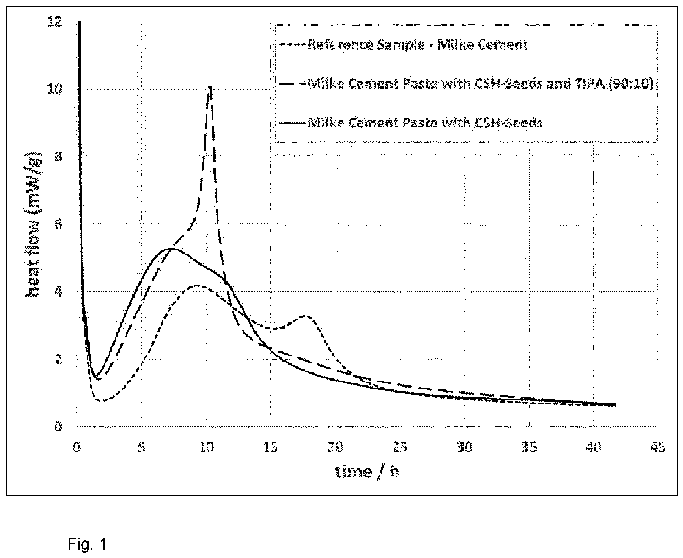

The accelerating performance of the calcium silicate hydrate seed composition or the combination of the calcium silicate hydrate seed composition with triisopropanolamine (TIPA) becomes evident by comparing the resulting heat of hydration curves with the heat of hydration curve of a cement reference sample (blank). The calorimetric heat of hydration of cement pastes at 20° C is shown in Figure 1 and reveal that for the samples containing the calcium silicate hydrate seed composition or a mix of the calcium silicate hydrate seed composition and TIPA the timespan required until the onset of the main hydration peak is much shorter compared to the reference sample. The steep increase in heat flow shown after the dormant phase is indicative for the good accelerating performance of the calcium silicate hydrate seed compositions. Moreover the synergetic effect between CSH-seeds and TIPA can be seen by the strong increase in the heat evolution, which is characterized by the rather sharp additional peak at 10 hours (Figure 1).

The concrete samples using two different cements, namely Milke CEM I 52.5 R and Bernburg CEM I 42.5 R, were prepared as follows and the details of the concrete compositions are summarized in table 3:
- cement, sand and all aggregates were dry mixed for 15 seconds
- 80% of the mixing water was added and mixed for 2 minutes
- The calcium silicate hydrate seed composition and a superplasticizer (for obtaining the desired workability) were added to the remaining water. The resulting solution was added to the concrete mix and mixed for further 2 minutes.

**Table 3: Concrete compositions**

| | **Content [kg/m³]** | **Content [kg/m³]** |
|---|---|---|
| CEM I 52.5 R Milke | 380 | |
| CEM I 52.5 R Bernburg | | 380 |
| Quartz sand 0.1-0.3 mm | 135 | 135 |
| Quartz sand 0.3-1.0 mm | 78 | 78 |
| Natural sand 0-4 mm | 696 | 696 |
| Gravel 2-5 mm | 238 | 238 |
| Gravel 5-8 mm | 207 | 207 |
| Gravel 8-11 mm | 218 | 218 |
| Gravel 11-16 mm | 297 | 297 |
| Superplasticizer 45 wt.% ^{[1]} | 0.27% bwoc | 0.27% bwoc |
| CSH-suspension 22 wt.% | 4% bwoc | 4% bwoc |
| Water | 160 | 160 |

| | | |
|---|---|---|
| [1] Superplasticizer = Glenium^{®} ACE30 | | |

**Table 4 a: Strength development in Milke cement**

| | | **Milke CEM I 52.5 R** | | | |
|---|---|---|---|---|---|
| **#** | **CSH-seeds sus. Dosage % [bwoc]** | **CS ^{[1]} 6 h [MPa]** | **CS ^{[1]} 9 h [MPa]** | **CS ^{[1]} 16 h [MPa]** | **CS ^{[1]} 24 h [MPa]** |
| 0* | - | n.a.^{[2]} | n.a. ^{[2]} | 38.00 | 47.40 |
| 4^{[3]} | 4 | 17.45 | 35.45 | 50.00 | 55.45 |
| 8^{[3]} | 4 | 18.5 | 36.50 | 51.55 | 54.75 |

| | | | | | |
|---|---|---|---|---|---|
| [1] compressive strength at 20 ° C [2] not determined [3] samples' codes of CSH-samples selected from Table 1 (see entry 4 and 8) * comparative example | | | | | |

**Table 4 b: Strength development in Bernburg cement**

| | | **Bernburg CEM I 52.5 R** | | | |
|---|---|---|---|---|---|
| **#** | **CSH-seeds sus. Dosage %** [bwoc] | **CS ^{[1]} 6 h [MPa]** | **CS ^{[1]} 9 h [MPa]** | **CS [1] 16 h [MPa]** | **CS [1] 24 h [MPa]** |
| 1* | - | n.a.^{[2]} | n.a.^{[2]} | 11.79 | 24.00 |
| 4^{[3]} | 4 | 2.45 | 7.67 | 22.00 | 29.50 |
| 8^{[3]} | 4 | 2.49 | 8.1 | 22.40 | 29.60 |

| | | | | | |
|---|---|---|---|---|---|
| [1] compressive strength at 20 ° C [2] not determined [3] samples' codes of CSH-samples selected from Table 1 * comparative example | | | | | |

It is evident from the results of table 3 and 4 that the addition of calcium silicate hydrate seed compositions (two samples were selected from table 2; entry 4 and 8 ) improves significantly the early strength development (at 6, 9 and 16 h) and also the compressive strength development up to 24 hours. The compressive strength values of the concrete specimens including the calcium silicate hydrate seed compositions (with or without TIPA) surpass those from the reference samples. The compressive strength values obtained with Bernburg CEM I 42.5 R cement are in general lower compared to the values obtained with Milke CEM I 52.5 R cement. This difference is due to the impact of the different cement types and their fineness.

## Claims

1. A process for the preparation of a calcium silicate hydrate seed composition useful as a hardening accelerator for cementitious compositions, comprising
(a) making a first jet and a second jet to collide in an interaction zone in the presence of an aqueous solution of at least one polymeric water-soluble dispersant, wherein
- the first jet comprises an aqueous solution of a calcium compound, and
- the second jet comprises an aqueous solution of a silicate compound, to precipitate calcium silicate hydrate seeds and to obtain a primary calcium silicate hydrate seed composition, and
(b) subjecting the primary calcium silicate hydrate seed composition to a shearing treatment, preferably a continuous shearing treatment.

2. Process according to claim 1, wherein the primary calcium silicate hydrate seed composition is discharged from the interaction zone within less than 1 s.

3. Process according to claim 1 or 2, wherein
a first pressurized liquid stream is released through a first nozzle to form the first jet, and
a second pressurized liquid stream is released through a second nozzle to form the second jet.

4. Process according to any one of the preceding claims, wherein the first pressurized liquid stream and/or the second pressurized liquid stream has a pressure in the range of from 10 to 200 bara, preferably 10 to 100 bara, more preferably 10 to 35 bara.

5. Process according to any one of the preceding claims, wherein the aqueous solution of the polymeric water-soluble dispersant is comprised in at least one of the first jet and the second jet.

6. Process according to claim 5, wherein the aqueous solution of the polymeric water-soluble dispersant is comprised in the first jet.

7. Process according to any one of the preceding claims, wherein the shearing treatment of step (b) comprises releasing the primary calcium silicate hydrate seed composition through a third nozzle.

8. Process according to any one of the preceding claims, wherein the pressure drop upon releasing the calcium silicate hydrate seed composition through the third nozzle is in the range of from 2 to 20 bara, preferably 2 to 10 bara.

9. Process according to any one of claims 1 to 6, wherein in step (a), the first jet and the second jet are made to collide in an interaction zone, and
the shearing treatment in step (b) comprises recycling the primary calcium silicate hydrate seed composition to the interaction zone.

10. Process according to any one of the preceding claims, wherein the calcium compound is selected from calcium chloride, calcium nitrate, calcium formate, calcium acetate, calcium bicarbonate, calcium bromide, calcium carbonate, calcium citrate, calcium chlorate, calcium fluoride, calcium gluconate, calcium hydroxide, calcium oxide, calcium hypochloride, calcium iodate, calcium iodide, calcium lactate, calcium nitrite, calcium oxalate, calcium phosphate, calcium propionate, calcium stearate, calcium sulphate, calcium sulphate hemihydrate, calcium sulphate dihydrate, calcium sulphide, calcium tartrate, calcium aluminate and mixtures thereof.

11. Process according to any one of the preceding claims, wherein the silicate compound is selected from sodium silicate, potassium silicate, aluminium silicate, sodium metasilicate, potassium metasilicate, and mixtures thereof.

12. Process according to any one of the preceding claims, wherein the molar ratio of calcium to silicon is in the range of from 0.6 to 2, preferably 1.1 to 1.8.

13. Process according to any one of the preceding claims, wherein the polymeric water-soluble dispersant is selected from
- polymers having a carbon-containing backbone to which are attached pendant ionic anchoring groups and polyether side chains,
- non-ionic polymers having a carbon-containing backbone to which are attached pendant hydrolysable groups and polyether side chains, the hydrolysable groups upon hydrolysis releasing ionic anchoring groups,
- sulfonated melamine-formaldehyde condensates,
- lignosulfonates,
- sulfonated ketone-formaldehyde condensates,
- sulfonated naphthalene-formaldehyde condensates,
- phosphonate containing dispersants,
- phosphate containing dispersants, and
- mixtures thereof.

14. Process according to claim 13, wherein the dispersant is selected from polycarboxylate ethers; phosphorylated polycondensates being obtainable by a condensation reaction of an aromatic compound having a phosphate moiety, an alkoxylated hydroxyaryl compound having a polyoxyalkylene chain and formaldehyde; and mixtures thereof.

15. Process according to any of claims 1 to 14, wherein an alkanolamine selected from the group of triisopropanolamine and methyl diethanolamine is present i) in the first jet or in the second jet of the process step a) or ii) is added before or after the shearing treatment of process step b) to the primary calcium silicate hydrate seed composition obtained in step a).

## Patentansprüche

1. Verfahren zur Herstellung einer Calciumsilicathydrat-Keimzusammensetzung, die als Härtungsbeschleuniger für zementhaltige Zusammensetzungen geeignet ist, umfassend
(a) Herstellen eines ersten Strahls und eines zweiten Strahls zur Kollision in einer Wechselwirkungszone in Gegenwart einer wässrigen Lösung von wenigstens einem polymeren wasserlöslichen Dispergiermittel, wobei
- der erste Strahl eine wässrige Lösung einer Calciumverbindung umfasst und
- der zweite Strahl eine wässrige Lösung einer Silicatverbindung umfasst,
um Calciumsilicathydrat-Keime zu präzipitieren und eine primäre Calciumsilicathydrat-Keimzusammensetzung zu erhalten, und
(b) Unterwerfen der primären Calciumsilicathydrat-Keimzusammensetzung an eine Scherbehandlung, vorzugsweise eine kontinuierliche Scherbehandlung.

2. Verfahren nach Anspruch 1, wobei die primäre Calciumsilicathydrat-Keimzusammensetzung innerhalb von weniger als 1 s aus der Wechselwirkungszone ausgetragen wird.

3. Verfahren nach Anspruch 1 oder 2, wobei
ein erster druckbeaufschlagter Flüssigkeitsstrom durch eine erste Düse freigesetzt wird, um den ersten Strahl zu bilden, und
ein zweiter druckbeaufschlagter Flüssigkeitsstrom durch eine zweite Düse freigesetzt wird, um den zweiten Strahl zu bilden.

4. Verfahren nach einem der vorstehenden Ansprüche, wobei der erste druckbeaufschlagte Flüssigkeitsstrom und/oder der zweite druckbeaufschlagte Flüssigkeitsstrom einen Druck in dem Bereich von 10 bis 200 bara, vorzugsweise 10 bis 100 bara, bevorzugter 10 bis 35 bara, aufweist.

5. Verfahren nach einem der vorstehenden Ansprüche, wobei die wässrige Lösung des polymeren wasserlöslichen Dispergiermittels in wenigstens einem von dem ersten Strahl und dem zweiten Strahl enthalten ist.

6. Verfahren nach Anspruch 5, wobei die wässrige Lösung des polymeren wasserlöslichen Dispergiermittels in dem ersten Strahl enthalten ist.

7. Verfahren nach einem der vorstehenden Ansprüche, wobei die Scherbehandlung von Schritt (b) Freisetzen der primären Calciumsilicathydrat-Keimzusammensetzung durch eine dritte Düse umfasst.

8. Verfahren nach einem der vorstehenden Ansprüche, wobei der Druckabfall bei Freisetzen der Calciumsilicathydrat-Keimzusammensetzung durch die dritte Düse in dem Bereich von 2 bis 20 bara, vorzugsweise 2 bis 10 bara, liegt.

9. Verfahren nach einem der Ansprüche 1 bis 6, wobei bei Schritt (a) der erste Strahl und der zweite Strahl in einer Wechselwirkungszone kollidieren gelassen werden, und
die Scherbehandlung bei Schritt (b) Rückführen der primären Calciumsilicathydrat-Keimzusammensetzung in die Wechselwirkungszone umfasst.

10. Verfahren nach einem der vorstehenden Ansprüche, wobei die Calciumverbindung ausgewählt ist aus Calciumchlorid, Calciumnitrat, Calciumformiat, Calciumacetat, Calciumbicarbonat, Calciumbromid, Calciumcarbonat, Calciumcitrat, Calciumchlorat, Calciumfluorid, Calciumgluconat, Calciumhydroxid, Calciumoxid, Calciumhypochlorid, Calciumiodat, Calciumiodid, Calciumlactat, Calciumnitrit, Calciumoxalat, Calciumphosphat, Calciumpropionat, Calciumstearat, Calciumsulfat, Calciumsulfat-Hemihydrat, Calciumsulfat-Dihydrat, Calciumsulfid, Calciumtartrat, Calciumaluminat und Gemischen davon.

11. Verfahren nach einem der vorstehenden Ansprüche, wobei die Silicatverbindung ausgewählt ist aus Natriumsilicat, Kaliumsilicat, Aluminiumsilicat, Natriummetasilicat, Kaliummetasilicat und Gemischen davon.

12. Verfahren nach einem der vorstehenden Ansprüche, wobei das Molverhältnis von Calcium zu Silicium in dem Bereich von 0,6 bis 2, vorzugsweise 1,1 bis 1,8, liegt.

13. Verfahren nach einem der vorstehenden Ansprüche, wobei das polymere wasserlösliche Dispergiermittel ausgewählt ist aus
- Polymeren mit einem kohlenstoffhaltigen Gerüst, an das seitenständige ionische Verankerungsgruppen und Polyetherseitenketten gebunden sind,
- nichtionischen Polymeren mit einem kohlenstoffhaltigen Gerüst, an das seitenständige hydrolysierbare Gruppen und Polyetherseitenketten gebunden sind, wobei die hydrolysierbaren Gruppen bei Hydrolyse ionische Verankerungsgruppen freigeben;
- sulfonierten Melamin-Formaldehyd-Kondensaten,
- Lignosulfonaten,
- sulfonierten Keton-Formaldehyd-Kondensaten,
- sulfonierten Naphthalin-Formaldehyd-Kondensaten,
- Phosphonat-enthaltenden Dispergiermitteln,
- Phosphat-enthaltenden Dispergiermitteln und
- Gemischen davon.

14. Verfahren nach Anspruch 13, wobei das Dispergiermittel ausgewählt ist aus Polycarboxylatethern; phosphorylierten Polykondensaten, erhältlich durch eine Kondensationsreaktion einer aromatischen Verbindung mit einer Phosphateinheit, einer alkoxylierten Hydroxyarylverbindung mit einer Polyoxyalkylenkette und Formaldehyd; und Gemischen davon.

15. Verfahren nach einem der Ansprüche 1 bis 14, wobei ein Alkanolamin ausgewählt aus der Gruppe von Triisopropanolamin und Methyldiethanolamin i) in dem ersten Strahl oder in dem zweiten Strahl des Verfahrensschritts a) vorhanden ist oder ii) vor oder nach der Scherbehandlung des Verfahrensschritts b) zu der bei Schritt a) erhaltenen primären Calciumsilicathydrat-Keimzusammensetzung zugegeben wird.

## Revendications

1. Procédé de préparation d'une composition de graines d'hydrate de silicate de calcium utile en tant qu'accélérateur de durcissement pour des compositions de ciment, comprenant
(a) le fait de faire entrer en collision un premier jet et un deuxième jet dans une zone d'interaction en présence d'une solution aqueuse d'au moins un dispersant hydrosoluble polymérique, dans lequel
- le premier jet comprend une solution aqueuse d'un composé de calcium, et
- le deuxième jet comprend une solution aqueuse d'un composé de silicate,
pour précipiter des graines d'hydrate de silicate de calcium et obtenir une composition primaire de graines d'hydrate de silicate de calcium, et
(b) la soumission de la composition primaire de graines d'hydrate de silicate de calcium à un traitement de cisaillement, de préférence un traitement de cisaillement continu.

2. Procédé selon la revendication 1, dans lequel la composition primaire de graines d'hydrate de silicate de calcium est évacuée de la zone d'interaction en moins de 1 s.

3. Procédé selon la revendication 1 ou 2, dans lequel un premier flux liquide sous pression est libéré par l'intermédiaire d'une première buse pour former le premier jet, et
un deuxième flux liquide sous pression est libéré par l'intermédiaire d'une deuxième buse pour former le deuxième jet.

4. Procédé selon l'une quelconque des revendications précédentes, dans lequel le premier flux liquide sous pression et/ou le deuxième flux liquide sous pression a une pression dans la plage de 10 à 200 bara, de préférence 10 à 100 bara, plus préférablement 10 à 35 bara.

5. Procédé selon l'une quelconque des revendications précédentes, dans lequel la solution aqueuse du dispersant hydrosoluble polymérique est comprise dans au moins l'un parmi le premier jet et le deuxième jet.

6. Procédé selon la revendication 5, dans lequel la solution aqueuse du dispersant hydrosoluble polymérique est comprise dans le premier jet.

7. Procédé selon l'une quelconque des revendications précédentes, dans lequel le traitement de cisaillement de l'étape (b) comprend la libération de la composition primaire de graines d'hydrate de silicate de calcium par l'intermédiaire d'une troisième buse.

8. Procédé selon l'une quelconque des revendications précédentes, dans lequel la chute de pression lors de la libération de la composition de graines d'hydrate de silicate de calcium par l'intermédiaire de la troisième buse est dans la plage de 2 à 20 bara, de préférence 2 à 10 bara.

9. Procédé selon l'une quelconque des revendications 1 à 6, dans lequel à l'étape (a), on fait entrer en collision le premier jet et le deuxième jet dans une zone d'interaction, et
le traitement de cisaillement dans l'étape (b) comprend un recyclage de la composition primaire de graines d'hydrate de silicate de calcium dans la zone d'interaction.

10. Procédé selon l'une quelconque des revendications précédentes, dans lequel le composé de calcium est choisi parmi le chlorure de calcium, le nitrate de calcium, le formiate de calcium, l'acétate de calcium, le bicarbonate de calcium, le bromure de calcium, le carbonate de calcium, le citrate de calcium, le chlorate de calcium, le fluorure de calcium, le gluconate de calcium, l'hydroxyde de calcium, l'oxyde de calcium, l'hypochlorite de calcium, l'iodate de calcium, l'iodure de calcium, le lactate de calcium, le nitrite de calcium, l'oxalate de calcium, le phosphate de calcium, le propionate de calcium, le stéarate de calcium, le sulfate de calcium, l'hémihydrate de sulfate de calcium, le dihydrate de sulfate de calcium, le sulfure de calcium, le tartrate de calcium, l'aluminate de calcium et leurs mélanges.

11. Procédé selon l'une quelconque des revendications précédentes, dans lequel le composé de silicate est choisi parmi le silicate de sodium, le silicate de potassium, le silicate d'aluminium, le métasilicate de sodium, le métasilicate de potassium, et leurs mélanges.

12. Procédé selon l'une quelconque des revendications précédentes, dans lequel le rapport molaire de calcium sur silicium est dans la plage de 0,6 à 2, de préférence 1,1 à 1,8.

13. Procédé selon l'une quelconque des revendications précédentes, dans lequel le dispersant hydrosoluble polymérique est choisi parmi
- des polymères ayant un squelette contenant du carbone auquel sont fixés des groupes d'ancrage ioniques pendants et des chaînes latérales de polyéther,
- des polymères non ioniques ayant un squelette contenant du carbone auquel sont fixés des groupes hydrolysables pendants et des chaînes latérales de polyéther, les groupes hydrolysables, lors de l'hydrolyse libérant des groupes d'ancrage ioniques,
- des condensats mélamine-formaldéhyde sulfonés,
- des lignosulfonates,
- des condensats de cétone-formaldéhyde sulfonés,
- des condensats de naphtalène-formaldéhyde sulfonés,
- des dispersants contenant phosphonate,
- des dispersants contenant phosphate, et
- leurs mélanges.

14. Procédé selon la revendication 13, dans lequel le dispersant est choisi parmi les éthers de polycarboxylate ; les polycondensats phosphorylés pouvant être obtenus par une réaction de condensation d'un composé aromatique ayant un groupement phosphate, un composé hydroxyaryle alcoxylé ayant une chaîne polyoxyalkylène et du formaldéhyde ; et leurs mélanges.

15. Procédé selon l'une quelconque des revendications 1 à 14, dans lequel une alcanolamine choisie dans le groupe de la triisopropanolamine et de la méthyldiéthanolamine est présente i) dans le premier jet ou dans le deuxième jet de l'étape a) ou ii) est ajoutée avant ou après le traitement de cisaillement de l'étape b) à la composition primaire de graines d'hydrate de silicate de calcium obtenue dans l'étape a).
